# EUROPÄISCHE PATENTSCHRIFT

(11) **EP 0 472 052 B1**
(45) Veröffentlichungstag und Bekanntmachung des Hinweises auf die Patenterteilung: **29.11.1995**
(21) Anmeldenummer: 91113252.0
(22) Anmeldetag: 07.08.1991
(51) Int. Cl.: H02P 6/08

(54) **Verfahren zur Regelung des Motorstroms eines bürstenlosen Gleichstrommotors**
Method for the regulation of a DC brushless motor current
Procédé pour la régulation du courant d'un moteur à courant continu sans balai

(30) Priorität: 21.08.1990 DE 4026366; 22.07.1991 DE 4124240
(43) Veröffentlichungstag der Anmeldung: 26.02.1992
(73) Patentinhaber: Heidelberger Druckmaschinen Aktiengesellschaft, D-69019 Heidelberg (DE)
(72) Erfinder: Albrecht, Kai, W-6900 Heidelberg (DE); Meyer, Helmut, W-6940 Weinheim (DE)
(74) Vertreter: Stoltenberg, Heinz-Herbert Baldo

(56) Entgegenhaltungen:
- EP-A- 0 093 182
- EP-A- 0 206 212
- EP-A- 0 253 787
- US-A- 4 757 241

## Beschreibung

Die Erfindung betrifft ein Verfahren zur Regelung des Motorstroms in den Phasenwicklungen eines bürstenlosen Gleichstrommotors, wobei die einzelnen Phasenwicklungen über einen elektronisch steuerbaren Gleichspannungs-Zwischenkreis-Umrichter (Umrichter) mit schaltbaren Halbleiterventilen und diesen parallel geschalteten Freilaufdioden in den einzelnen Brückenzweigen bestromt werden, und die Istwert-Erfassung des Motorstroms ausschließlich im Gleichspannungs-Zwischenkreis erfolgt.

Da bürstenlose Gleichstrommotoren sich durch eine hohe Dynamik und eine gute Steuerbarkeit auszeichnen, werden sie in zunehmendem Maße in der Antriebstechnik eingesetzt. Als nicht unproblematisch erweist sich jedoch die Ansteuerung der Motoren über einen weiten Drehzahlbereich, insbesondere in Richtung kleiner Drehzahlen. Um ein sanftes, glattes Anlaufen eines bürstenlosen Gleichstrommotors sicherzustellen, wird in der DE-OS 35 25 210 folgende Steuerschaltung beschrieben: Bei Erreichen eines vorgegebenen Vergleichswertes wird die Erregung der Statorwicklungen für eine zuvor festgelegte Zeitdauer mittels einer Impulslängen-Modulationseinheit unterbrochen. Bedingt durch die Variation der Abbau- aber auch der Aufbauzeiten des Motorstroms werden die Statorwicklungen durch eine impulslängenmodulierte Spannung erregt, deren Frequenz und Einschaltrate im Bereich tiefer Drehzahlen höher liegen als im Bereich hoher Drehzahlen.

Die in der DE-OS 35 25 210 beschriebene Ansteuerschaltung ist jedoch nur vorteilhaft einsetzbar, solange der angesteuerte Motor während des Betriebs mit einer festgelegten Enddrehzahl läuft. Entsprechend dieser Drehzahl wird die Zeitdauer für die Unterbrechung des Motorstroms optimal bestimmt, wobei optimal bedeutet, daß die Zeitdauer so bemessen ist, daß die Motorstromeinbrüche und damit die Drehmomentschwankungen möglichst gering sind. Damit letzteres der Fall ist, muß je nach Höhe der Enddrehzahl die Zeitdauer zur Unterbrechung des Motorstroms entsprechend kurz gewählt werden. Im unteren Drehzahlbereich führt dies automatisch zu extrem kurzen Unterbrechungszeiten des Motorstroms bzw. zu einer sehr hohen Schaltfrequenz der Leistungstransistoren des Umrichters. Als Folge der hohen Schaltbeanspruchung der Leistungstransistoren verkürzt sich deren Lebensdauer. Wird andererseits - um diese hohe Schaltrate der Leistungstransistoren im unteren Drehzahlbereich zu verringern - die Zeitdauer zur Unterbrechung des Motorstrom auf eine Drehzahl im mittleren Drehzahlbereich abgestimmt, ergeben sich starke Motorstromeinbrüche und damit eine hohe Drehmomentwelligkeit im oberen Drehzahlbereich. Fazit ist, daß die in der DE-OS 35 25 210 vorgeschlagene Lösung zwar für den speziellen Anwendungsfall brauchbar ist, daß sie jedoch nicht zufriedenstellend arbeitet, wenn die Drehzahl über einen weiten Drehzahlbereich mit großer Genauigkeit geregelt werden soll, wie es beispielsweise beim Antrieb von Druckmaschinen der Fall ist. Hier ist unbedingt dafür Sorge zu tragen, daß bei jeder beliebigen Druckgeschwindigkeit Drehmomentschwankungen weitgehend unterdrückt werden, da sie Passerfehler verursachen und damit zum Druck von Makulatur führen.

Der Erfindung liegt die Aufgabe zugrunde, ein Verfahren zur Regelung des Motorstroms bei einem bürstenlosen Gleichstrommotor bei ausschließlicher Nutzung einer "Einfach"-Strommessung im Zwischenkreis vorzuschlagen, durch welches sowohl die Stromwelligkeit des Motors als auch die Taktfrequenz zur Beaufschlagung der Phasenwicklungen mit Strom auf ein Mindestmaß reduziert werden.

Die Aufgabe wird dadurch gelöst, daß bei Erreichen des Sollwertes des Motorstroms im motorischen Betrieb nur ein schaltbares Halbleiterventil der beaufschlagten Brückenzweige für eine von der Drehzahl abhängige Zeitdauer tₛ ausgeschaltet wird und der Zeitpunkt zur Wiedereinschaltung dieses Halbleiterventils in Abhängigkeit von der Drehzahl ermittelt wird.

Durch das Ausschalten nur eines Halbleiterventils im motorischen Betrieb bei Erreichen des Sollwertes des Motorstroms wird eine geringere Stromwelligkeit erreicht. Hierdurch wird die Verlustleistung und damit die Erwärmung der Halbleiterventile - üblicherweise handelt es sich hierbei um Leistungstransistoren - reduziert, was sich positiv auf die Lebensdauer der Transistoren auswirkt.

Ein weiterer Vorteil, der sich aus dem erfindungsgemäßen Verfahren ergibt, betrifft die erhebliche Geräuschreduktion des Motors während des motorischen Betriebs, also der üblichen Zweckbestimmung des Motors. Die Ursache für die Geräuschminderung liegt darin, daß bei Abschalten nur eines der beiden Leistungstransistoren der beaufschlagten Brückenzweige die am Motor anliegende Spannung um die Hälfte reduziert wird: die getaktete Phasenwicklung liegt nun entweder an der Spannung 0 Volt oder an der Betriebsspannung U_{B} der Gleichspannungsquelle. Desweiteren wird in vorteilhafter Weise außerdem der Effektivstrom im Kondensator verringert.

Während im motorischen Betrieb nur ein schaltbares Halbleiterventil der mit Strom beaufschlagten Brückenzweige getaktet wird, werden in einer vorteilhaften Ausführungsform des erfindungsgemäßen Verfahrens im generatorischen Betrieb die Halbleiterventile beider Brückenzweige bei Erreichen des Sollwertes des Motorstrom ausgeschaltet. Alternativ zur Vorgabe der drehzahlabhängigen Zeitdauer für die Unterbrechung des Motorstroms kann die Stromregelung mittels eines 2-Punkt-Stromreglers erfolgen, da im generatorischen Betrieb der in die Spannungsquelle zurückfließende Strom von der Einfachstrommessung im Gleichspannungs-Zwischenkreis erfaßt wird, der Motorstrom also auch während des Stromabbaus bekannt ist.

Gemäß einer vorteilhaften Ausführungsform des erfindungsgemäßen Verfahrens wird im generatorischen Betrieb nur ein schaltbares Halbleiterventil der beaufschlagten Brückenzweige für eine von der Drehzahl abhängige Zeitdauer eingeschaltet. Während im motorischen Betrieb infolge der "Einfach"-Strommessung im Gleichspannungs-Zwischenkreis der Stromabbau nicht gemessen wird, ergibt sich im generatorischen Betrieb das Problem, daß der Motorstrom während des Stromaufbaus mit der Einfachstrommessung im Zwischenkreis nicht erfaßt wird. Durch Einschalten nur eines Halbleiterventils wird auch im generatorischen Betrieb die Verlustleistung und damit die Erwärmung der Halbleiterventile reduziert, was sich einerseits positiv auf die Lebensdauer der Halbleiterventile auswirkt, andererseits auch eine erheblich Geräuschreduktion des Motors im generatorischen Betrieb mit sich bringt. Bei Anwendungen, bei denen einer der Motoren ständig im generatorischen Betrieb arbeitet, macht sich eine starke Geräuschentwicklung des Antriebs störend bemerkbar. Die erfindungsgemäße Weiterbildung trägt dazu bei, diese Geräuschentwicklung wesentlich herabzusetzen.

Die Ausschaltzeitdauer eines Halbleiterventils im motorischen Betrieb bzw. die Einschaltzeitdauer eines Halbleiterventils im generatorischen Betrieb sind nicht nur von der Drehzahl des Motors, sondern auch von anderen Parametern, beispielsweise von der Induktivität des Motors, von dem Widerstand des Motors, von der Temperatur des Motors, von der Abweichung zwischen Stromsollwert und Stromistwert und von der Spannung im Zwischenkreis abhängig.

Wie bereits zuvor beschrieben, ist der Motorstrom während des Stromaufbaus im generatorischen Betrieb im Gleichspannungs-Zwischenkreis nicht meßbar. Gemäß einer Weiterbildung des erfindungsgemäßen Verfahrens wird vorgeschlagen, daß die Einschaltzeitdauer nach dem Starten des Motors bzw. bei jedem Kommutierungsvorgang so bemessen ist, daß der erste meßbare Motorstrom-Istwert, der erst bei Einleitung des Stromabbaus im Gleichspannungs-Zwischenkreis meßbar wird, in der Nähe des Motorstrom-Sollwertes liegt - üblicherweise sollte er kleiner als der Motorstrom-Sollwert sein.

Ist nach Ablauf der Einschaltzeitdauer der untere Grenzwert des Motorstroms nicht erreicht, wird in einer weiteren Ausführungsform des erfindungsgemäßen Verfahrens das schaltbare Halbleiterventil des beaufschlagten Brückenzweiges für eine Mindest-Auszeit ausgeschaltet. Diese Mindest-Auszeit sollte zumindest gleich der Schonzeit des entsprechenden Halbleiterventils sein. Durch diese Maßnahme wird verhindert, daß das schaltbare Halbleiterventil, das ansonsten bei Nichterreichen des Motorstrom-Sollwertes sofort wieder eingeschaltet werden würde, zu sehr beansprucht wird.

In einer weiteren Ausführungsform des erfindungsgemäßen Verfahrens ist vorgesehen, daß das schaltbare Halbleiterventil der beaufschlagten Brückenzweige bei Ablauf der Einschaltzeitdauer ausgeschaltet wird, daß der nach dem Ausschalten im Zwischenkreis gemessene Motorstrom-Istwert abgespeichert wird, daß dieser Motorstrom-Istwert mit einem Motorstrom-Sollwert verglichen wird und daß bei einer Abweichung des Motorstrom-Istwertes vom Motorstrom-Sollwert ein Korrekturwert ermittelt wird, der in die Bemessung der folgenden Einschaltzeitdauer des schaltbaren Halbleiterventils der beaufschlagten Brückenzweige einfließt. Sukzessive wird durch diese Maßnahme erreicht, daß durch eine entsprechende Bemessung der Einschaltzeitdauer der untere Grenzwert als Startpunkt für die nächstfolgende Einschaltzeitdauer erreicht wird.

Sobald der zuvor festgelegte untere Grenzwert erreicht ist, wird das schaltbare Halbleiterventil der beaufschlagten Brückenzweige für die korrigierte Zeitdauer eingeschaltet. Ab diesem Zeitpunkt ist sichergestellt, daß auch im generatorischen Betrieb das schaltbare Halbleiterventil für eine den jeweils geltenden Parametern angepaßte Zeitdauer eingeschaltet wird.

Kritisch bei diesem Verfahren ist der Umschaltpunkt zwischen generatorischem und motorischem Betrieb. Gemäß einer Weiterbildung des erfindungsgemäßen Verfahrens wird angeregt, daß der Umschaltpunkt nicht bei der Drehzahl n = 0 min⁻¹ liegt, sondern bei einer niedrigen Drehzahl im generatorischen Bereich. Hierdurch wird sichergestellt, daß auch im generatorischen Betrieb um die Drehzahl n = 0 min⁻¹ ein Stromfluß im Motor zustande kommt.

Um die Halbleiterventile zusätzlich zu schonen, wird vorgeschlagen, daß sowohl im generatorischen als auch im motorischen Betrieb die schaltbaren Halbleiterventile in dem beaufschlagten Brückenzweig abwechselnd eingeschaltet werden (generatorischer Betrieb) bzw. abwechselnd ausgeschaltet werden (motorischer Betrieb). Durch diese Maßnahme wird im generatorischen Betrieb sogar erreicht, daß der Stromaufbau sich abwechselnd über den oberen bzw. den unteren Kreis des Umrichters aufbaut, wodurch eine gleichmäßgie Beanspruchung der Halbleiterventile des Umrichters erreicht wird.

Die Erfindung wird anhand der nachfolgenden Zeichnungen näher erläutert.

Es zeigt
- Fig. 1: die Schaltung des Antriebs gemäß einer Ausführungsform im motorischen Betrieb des erfindungsgemäßen Verfahrens,
- a: während des Stromaufbaus,
- b: während des Stromabbaus,
- Fig. 1c: den Stromverlauf in einer Phasenwicklung im unteren Drehzahlbereich für den motorischen Betrieb,
- Fig. 1d: den Stromverlauf in einer Phasenwicklung im oberen Drehzahlbereich für den motorischen Betrieb,
- Fig. 1e: den Stromverlauf im Gleichspannungs-Zwischenkreis für den motorischen Betrieb,
- Fig. 1f: Verlauf des Motorstroms nach einem Start oder nach einer Kommutierung im motorischen Betrieb gemäß einer Ausführungsform des erfindungsgemäßen Verfahrens,
- Fig. 1g: Stromverlauf im Gleichspannungs-Zwischenkreis im motorischen Betrieb gemäß einer Ausführungsform des erfindungsgemäßen Verfahrens,
- Fig. 2a: den Stromverlauf in einer Phasenwicklung für den generatorischen Betrieb,
- Fig. 2b: den Stromverlauf im Gleichspannungs-Zwischenkreis für den generatorischen Betrieb,
- Fig. 3a: die Schaltung des Antriebs gemäß einer Ausführungsform des erfindungsgemäßen Verfahrens während des Stromaufbaus im generatorischen Betrieb,
- Fig. 3b: die Schaltung des Antriebs gemäß einer Ausführungsform des erfindungsgemäßen Verfahrens während des Stromabbaus im generatorischen Betrieb,
- Fig. 4a: den Stromverlauf in einer Phasenwicklung für den generatorischen Betrieb bei Taktung eines Transistors,
- Fig. 4b: den Stromverlauf im Gleichspannungs-Zwischenkreis für den generatorischen Betrieb bei Taktung eines Transistors,
- Fig. 5a: Verlauf des Motorstroms nach einem Start oder nach einer Kommutierung im generatorischen Betrieb gemäß einer Ausführungsform des erfindungsgemäßen Verfahrens,
- Fig. 5b: Stromverlauf im Gleichspannungs-Zwischenkreis im generatorischen Betrieb gemäß einer Ausführungsform des erfindungsgemäßen Verfahrens,
- Fig. 6: ein Blockschaltbild eines Gleichstromantriebs entsprechend dem erfindungsgemäßen Verfahren und
- Fig. 7: ein Flußdiagramm für die Ansteuerung der Sperre.

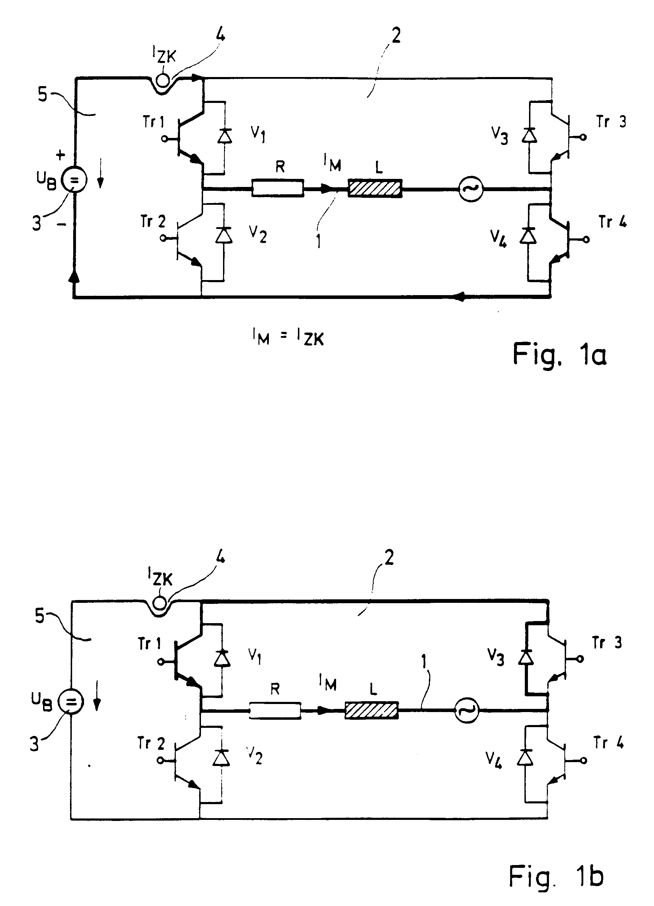

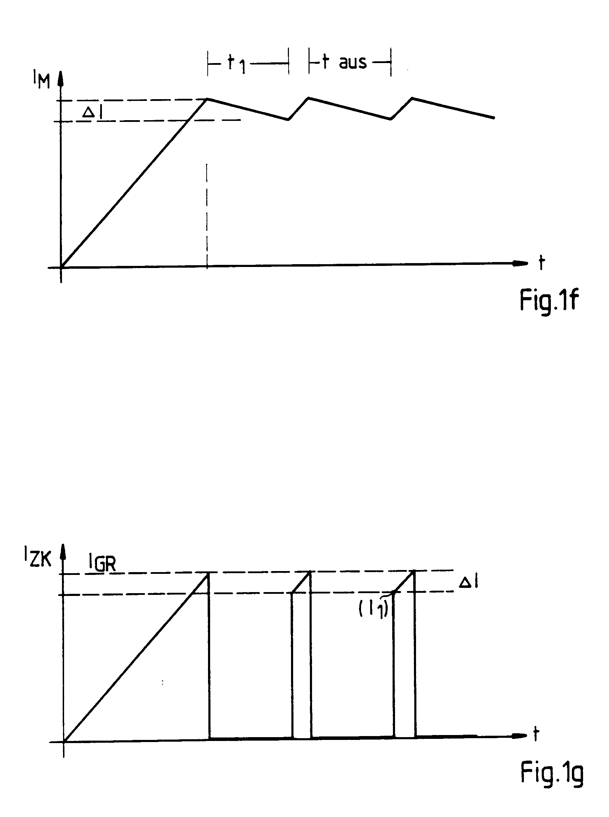

In den Figuren 1a und 1b ist eine Schaltung des Antriebs gemäß einer Ausführungsform des erfindungsgemäßen Verfahrens im motorischen Betrieb dargestellt. Fig. 1a zeigt die Schaltung während des Stromaufbaus, in Fig. 1b ist die Schaltung während des Stromabbaus dargestellt. Der Motor 1, der als Ersatzschaltbild durch den Widerstand R, die Induktivität L und eine Wechselspannungquelle dargestellt ist, wird über den Gleichspannungs-Zwischenkreis-Umrichter (Umrichter) 2 angesteuert. Die einzelnen Brückenzweige des Umrichters 2 werden von jeweils einem Leistungstransistor Tr1 bis Tr 4 mit parallel geschalteter Freilaufdiode V1 bis V4 gebildet.

Um eine exakte Arbeitsweise des bekannten Stromreglers sicherzustellen, muß der Motorstrom in jedem Augenblick bekannt sein. Hierzu ist es unerläßlich den Motorstrom I_{M} in jeder einzelnen Phasenwicklung zu messen. Um Fehler im Leistungsteil (z. B. Kurzschluß einer Brücke) zu erkennen, sollte auch bei dieser sogenannten Mehrfachstrommessung nicht auf eine zusätzliche Messung des Stroms I_{ZK} im Gleichspannungs-Zwischenkreis 5 verzichtet werden.Die Regelung des Motorstroms I_{M} auf einen vorgegebenen Sollwert erfolgte bisher in bekannter Weise in beiden Betriebsarten durch das Ein- und Ausschalten zweier Transistoren, die in diagonalen Brückenzweigen angeordnet sind. Die Transistoren werden jeweils dann ein- bzw. ausgeschaltet, wenn der Motorstrom einen unteren bzw. einen oberen Stromgrenzwert erreicht.

Um die Mehrkosten einzusparen, die durch die Verwendung mehrerer Strommeßeinrichtungen 4 verursacht werden, baut das erfindungsgemäße Verfahren auf einer Einfachstrommessung im Gleichspannungs-Zwischenkreis 5 auf. Eine für die Strommessung geeignete Meßeinrichtung 4 ist in der DE-OS 37 08 892 beschrieben.

Allerdings treten bei der Einfachstrommessung im Gleichspannungs-Zwischenkreis 5 bei Taktung nur eines Transistors während des motorischen Betriebs Probleme auf: zwar ist der Anstieg des Motorstroms I_{M} bei Schaltung der Transistoren Tr1 und Tr4 in den leitenden Zustand identisch mit dem Strom, der im Gleichspannungs-Zwischenkreis 5 gemessen wird, jedoch erfaßt die Meßeinrichtung 4 nicht den sich abbauenden Strom, wenn der Transistor Tr1 bzw. Tr4 bei Erreichen des Motorstrom-Sollwertes I_{Ref} in den Sperrzustand gesteuert werden. Der von der Meßeinrichtung 4 im Gleichspannungs-Zwischenkreis 5 gemessene Strom I_{ZK} ist in Fig. 1e dargestellt. Die entsprechende Schaltung während des Stromabbaus zeigt Fig. 1b.

Erreicht der Motorstrom I_{M} einen oberen Grenzwert I_{Ref}, wird nur einer der bei den Transistoren - hier der Transistor Tr4 - ausgeschaltet. Der Motorstrom I_{M} baut sich über den Transistor Tr1 und die Freilaufdiode V3, die dem Transistor Tr3 parallel geschaltet ist, ab. Diese Art der Ansteuerung zeigt keinerlei Änderungen auf den zeitlichen Verlauf des Stromanstiegs, jedoch wird die Abbauzeit des Stroms größer, da der Freilaufstrom aus der Induktivität L über einen Stromkreis fließt, der über den Transistor Tr1 und die Freilaufdiode V3 geschlossen wird.

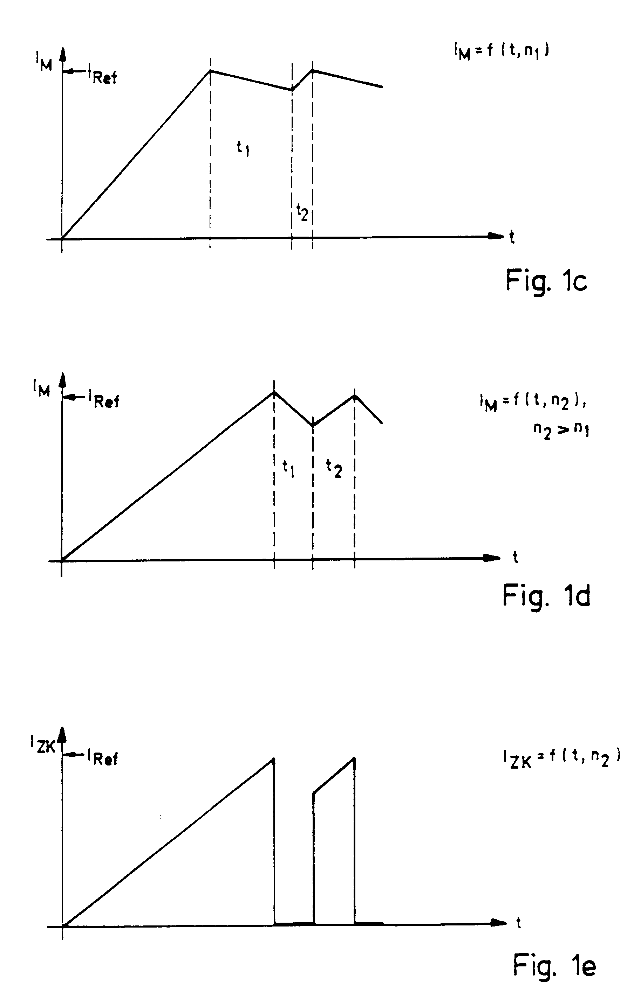

Die Figuren 1c und 1d zeigen den Verlauf des Motorstroms I_{M}, der sich bei Anwendung des erfindungsgemäßen Verfahrens einstellt. Während die Stromaufbauzeit bei steigender Motordrehzahl länger wird, erfolgt der Abbau des Motorstroms I_{M} infolge der größer werdenden Gegenspannung mit steigender Drehzahl schneller, die Stromabbauzeit nimmt mit steigender Drehzahl ab. Erfindungsgemäß wird die "Aus"-zeit für die den Motorstrom leitenden Transistoren in Abhängigkeit von der Drehzahl festgelegt. Die "Aus"-zeit ist also über den gesamten Drehzahlbereich variabel und so bemessen, daß die Welligkeit des Motorstroms I_{M} und damit des Drehmoments und die Schaltfrequenz möglichst gering sind. In Fig. 1c, die den Stromverlauf im unteren Drehzahlbereich zeigt, ist die "Aus"-zeit größer gewählt als in Fig. 1d, die den Stromverlauf im oberen Drehzahlbereich skizziert. Die Festsetzung der "Aus"-zeiten t₁ bzw. t₂ trägt der zuvor beschriebenen reziproken Abhängigkeit der Stromabbauzeit von der Drehzahl Rechnung. Zu beachten hierbei ist jedoch, daß die EMK und die "Aus"-zeit nicht im gesamten Drehzahlbereich eine lineare Abhängigkeit aufweisen. Insbesondere im unteren Drehzahlbereich ergeben sich sehr lange Sperrzeiten, da sich der Strom nur noch sehr langsam abbaut. Bleibt diese Abhängigkeit unbeachtet, so besteht die Gefahr, daß die Schonzeit der Transistoren aufgrund der zu kurzen "Ein"-zeit unterschritten wird.

In Fig. 1f ist der Verlauf des Motorstroms nach einem Start oder nach einer Kommutierung im motorischen Betrieb gemäß einer Ausführungsform des erfindungsgemäßen Verfahrens dargestellt. Die Regelung erfolgt derart, daß eine konstante Hysterese erzielt wird. Erreicht der Motorstrom den Grenzwert I_{Gr}, so wird einer der Transistoren der beaufschlagten Brückenzweige für eine von der Drehzahl abhängige Zeitdauer t1 gesperrt. Stimmt der zum Einschaltzeitpunkt gemessene Strom I₁ nicht mit dem Motorstrom an der unteren Grenze des Toleranzbandes I überein, so wird ein Korrekturfaktor k eingeführt, der bei der Bestimmung der nächsten "Aus"-zeit tₛ berücksichtigt wird. Hierdurch wird sukzessive erreicht, daß der Motorstrom I_{M} mit Ablauf der "Aus"-zeit tₛ die untere Grenze der Toleranz I erreicht.

Anstelle der konstanten Hysterese ist es ebenso möglich, das erfindungsgemäße Verfahren bei maximal zulässiger Frequenz auf einen kleinstmöglichen Hysteresewert abzustimmen, der insbesondere durch die Schonzeit der Halbleiterventile bestimmt ist.

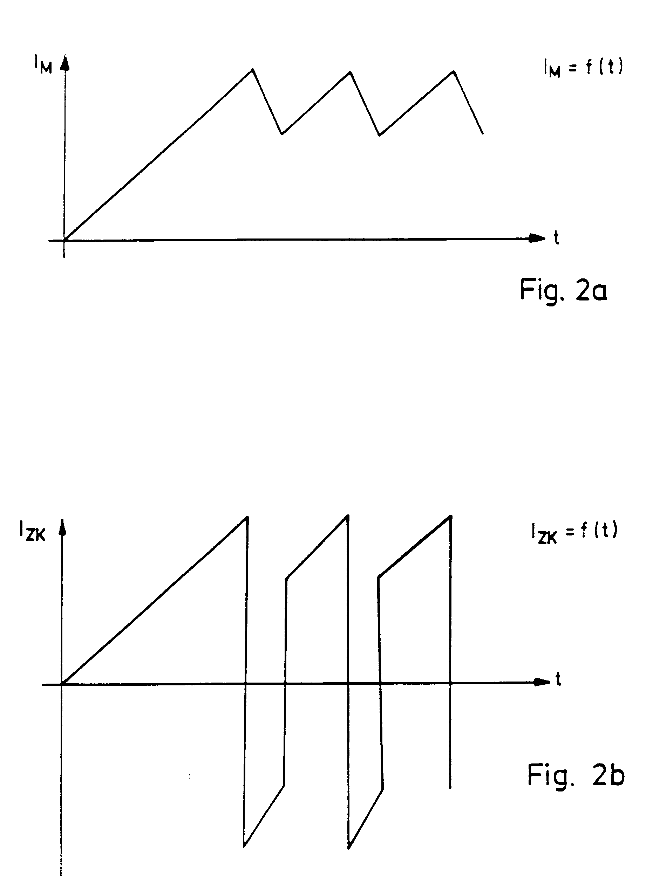

In Fig. 2a ist der Verlauf des Motorstroms I_{M} In einer Phasenwicklung, in Fig. 2b der gleichzeitig gemessene Strom I_{ZK} im Gleichspannungs-Zwischenkreis 5 für den generatorischen Betrieb dargestellt. Da der sich abbauende Motorstrom I_{M} bei Taktung beider Transistoren bei Abschalten der Transistoren über die Meßeinrichtung 4 in die Gleichspannungsquelle 3 zurückfließt, stimmt der Betrag des im Gleichspannungs-Zwischenkreis 5 gemessenen Stroms I_{ZK} mit dem Motorstrom I_{M} jederzeit überein. Daher ist es hier auch weiterhin möglich, den Motorstrom I_{M} innerhalb der beiden festgelegten Stromgrenzwerte mittels eines Zwei-Punkt-Reglers zu regeln.

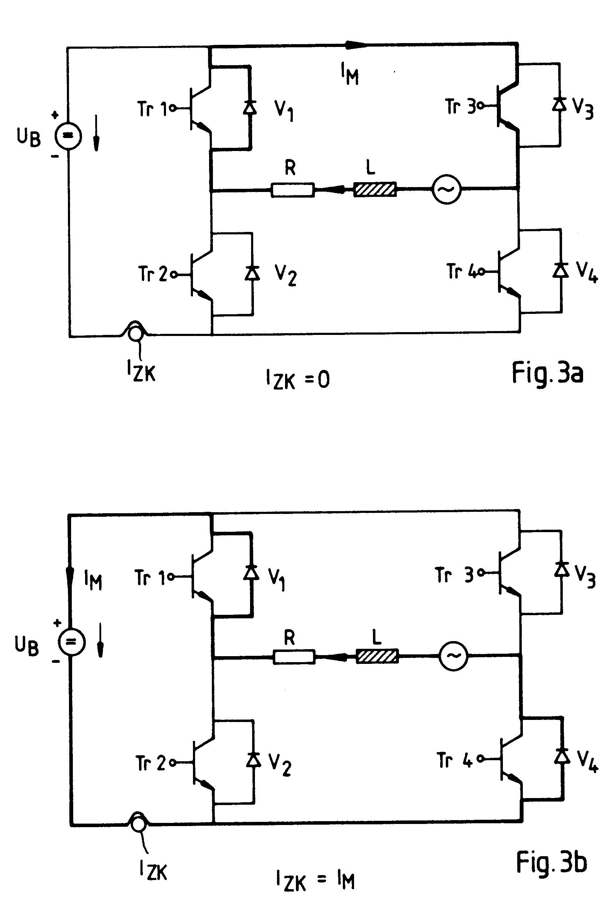

Fig. 3a zeigt die Schaltung des Antriebs gemäß einer Ausführungsform des erfindungsgemäßen Verfahrens während des Stromaufbaus im generatorischen Betrieb, während Fig. 3b die Schaltung des Antriebs während des Stromabbaus darstellt. Der Motor 1, der als Ersatzschaltbild durch den Widerstand R, die Induktivität L und eine Wechselspannungsquelle dargestellt ist, wird wie im motorischen Betrieb über den Gleichspannungs-Zwischenkreis-Umrichter 2 angesteuert. Die einzelnen Brückenzweige des Umrichters 2 werden auch hier jeweils von den Leistungstransistoren Tr1 bis Tr4 mit parallel geschalteten Freilaufdiode V1 bis V4 gebildet. Die Regelung des Motorstroms I_{M} auf einen vorgegebenen Sollwert I_{Soll} erfolgt über die Taktung der Transistoren Tr1 bis Tr4. Gemäß einer Ausführungsform des erfindungsgemäßen Verfahrens erfolgt der Stromaufbau beispielsweise nicht über die beiden Transistoren Tr3 und Tr2 in diagonalen Brückenzweigen, sondern über den Transistor Tr3 und die Freilaufdiode V1. Der Strom I_{M} fließt im "oberen Kreis" des Umrichters 2. Der im Motor fließende Strom I_{M} wird von der Strommeßeinrichtung 4 im Gleichspannungs-Zwischenkreis 2 nicht erfaßt. Daher ist der im Zwischenkreis 2 gemessene Strom I_{ZK} zur Stromregelung des Motors während des Stromaufbaus nicht verfügbar. Erfindungsgemäß wird der Transistor Tr3 für eine von der Drehzahl und von anderen Parametern abhängige Zeitdauer tₑ eingeschaltet.

Wie in Fig. 3b dargestellt, ist in der Stromabbauphase auch der getaktete Transistor Tr3 abgeschaltet. Der Stromabbau erfolgt über die Freilaufdioden V4 und V1. Der Motorstrom I_{M} entspricht während der Stromabbauphase dem im Zwischenkreis gemessenen Strom I_{ZK}. Erreicht der im Zwischenkreis gemessene Strom I_{ZK} den unteren Grenzwert, so wird der Transistor Tr3 des beaufschlagten Brückenzweiges wiederum für eine von der Drehzahl abhängige Zeitdauer tₑ eingeschaltet.

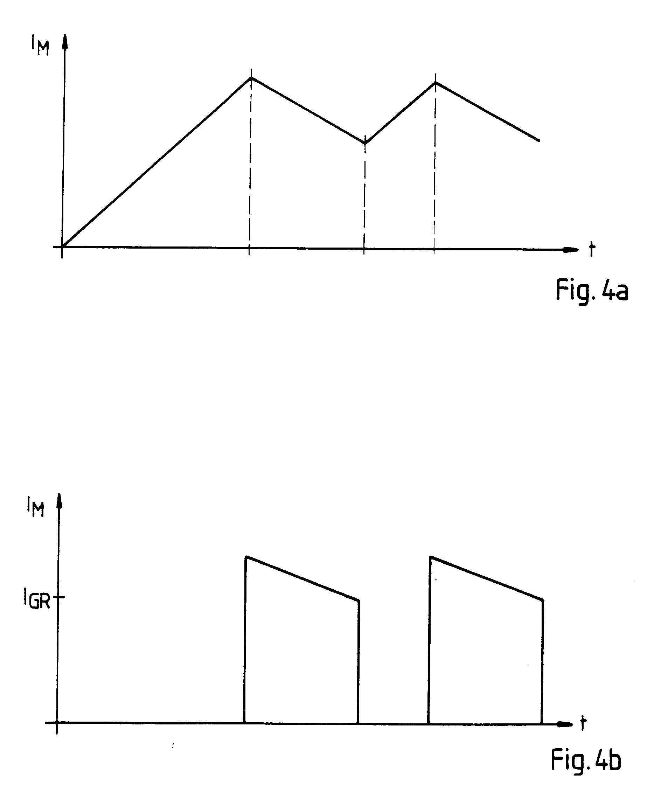

In den Fig. 4a bzw. 4b ist der Motorstrom I_{M} bzw. der im Zwischenkreis gemessene Strom I_{ZK} gegen die Zeit aufgetragen. Wie aus Fig. 4b ersichtlich, wird der Motorstrom I_{M} während der Stromaufbauphase im Gleichspannungs-Zwischenkreis nicht gemessen, d. h., während der Stromaufbauphasen liegt der Stromregelung kein Stromistwert I_{Ist} vor.

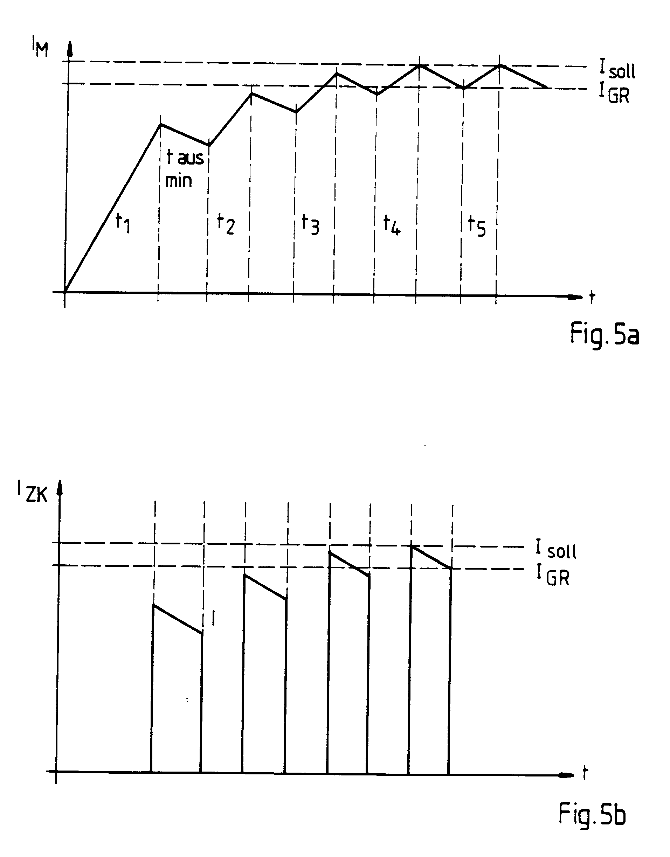

Fig. 5a zeigt den Stromverlauf des Motorstroms I_{M} nach Einschalten des Motors bzw. nach einer Kommutierung in Abhängigkeit von der Zeit. Während einer ersten Einschaltphase des Transistors Tr3 des beaufschlagten Brückenzweiges gemäß Fig. 3a baut sich der Strom auf. Die Zeitdauer t1 ist so bemessen, daß der erste Stromistwert I_{Ist} nach Ausschalten des Transistors Tr3 in der Nähe des Motorstrom-Sollwertes I_{Soll} liegt. Dieser Wert wird in einer Recheneinrichtung gespeichert. Bei einer Abweichung zwischen dem gemessenen Stromistwert I_{Ist} und dem vorgegebenen Stromsollwert I_{Soll} wird der getaktete Transistor - gemäß Fig. 3a der Transistor Tr3 - für eine Mindest-Auszeit t_{aus min} ausgeschaltet. Diese Mindest-Auszeit t_{aus min} orientiert sich an der Schonzelt des Transitors und soll verhindern, daß bei einem Nichterreichen des Stromsollwertes der getaktete Transistor des beaufschlagten Brückenzweiges sofort wieder eingeschaltet wird, wodurch dessen Lebensdauer erheblich verringert werden würde. Nach dieser Mindest-Ausschaltzeit t_{aus min} wird der entsprechende Stromistwert wiederum abgespeichert. Bei einer Abweichung dieses gemessenen Motorstrom-Istwertes Iᵢₛₜ vom vorgegebenen Motorstrom-Sollwert I_{Soll} wird von einer Recheneinrichtung eine korrigierte Einschaltzeit t2 berechnet. Weicht der zum Abschaltzeitpunkt des Transistors Tr3 gemessene Motorstrom-Istwert I_{Ist} im Gleichspannungs-Zwischenkreis vom vorgegebenen Motorstrom-Sollwert I _{Soll} ab, so wird wiederum der Transistor für eine Mindest-Auszeit t_{aus min} abgeschaltet. Die folgende Einschaltzeit t3 des Transistor Tr3 wird evtl. wiederum korrigiert und zwar sukzessive so lange, bis der im Abschaltzeitpunkt des Transistors Tr3 des beaufschlagten Brückenzweiges gemessene Motorstrom-Istwert I_{Ist} mit dem Motorstrom-Sollwert I_{Soll} übereinstimmt. Ab diesem Zeitpunkt wird der Transistor Tr3 des beaufschlagten Brückenzweiges jeweils für die ermittelte Zeitdauer tₛ abgeschaltet.

Die Recheneinrichtung berücksichtigt bei der Einschaltdauer weiterhin die Abhängigkeit des Motorstrom von anderen Parametern, wie beispielsweise der Induktivität L des Motors, dem Widerstand R des Motors, der Motortemperatur, der drehzahlabhängigen EMK, sowie der vorgegebenen Stromtoleranz I des Motorstrom-Sollwertes I_{Soll}.

Fig. 5b zeigt den im Zwischenkreis gemessenen Strom I_{ZK} während der Taktung des Transistors T3 des beaufschlagten Brückenzweiges.

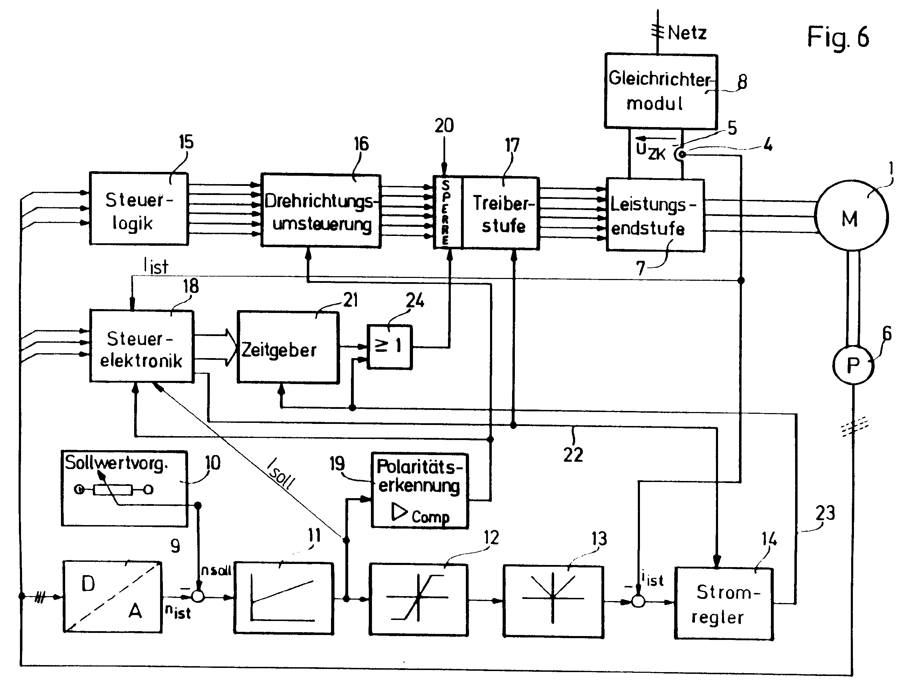

In Fig. 6 ist ein Blockschaltbild eines bürstenlosen Gleichstromantriebs zur Durchführung des erfindungsgemäßen Verfahrens dargestellt. Der Antrieb weist das Ersatzschaltbild eines bürstenlosen Gleichstrommotors 1 mit permanentmagnetischem Rotor und drei Phasenwicklungen auf. Dem Gleichstrommotor 1 ist in bekannter weise ein Rotorlagegeber 6 zugeordnet, der die die Kommutierungszeitpunkte bestimmenden Kommutierungssignale liefert. Der Gleichspannungs-Zwischenkreis-Umrichter 2 des Gleichstrommotors 1 besteht aus einem netzseitigen Gleichrichtermodul 8 und einer maschinenseitigen Leistungsstufe 7. Die Leistungsstufe 7 ist als dreiphasige Drehstrombrücke aufgebaut. Im Gleichspannungs-Zwischenkreis 5 mit eingeprägter Gleichspannung U_{ZK} wird mittels einer Strommeßeinrichtung 4 der Strom im Gleichspannungs-Zwischenkreis 5 potentialfrei gemessen (Einfachstrommessung im Gleichspannungs-Zwischenkreis 5).

Die digitalen Signale des Rotorlagegebers 6 dienen als Drehzahl-Istwert und werden von der Drehzahl-Istwert-Aufbereitung (D/A Wandler) 9 in eine analoge Spannung umgesetzt. Da kein externer Tacho zur Drehzahl-Istwert-Erfassung notwendig ist, stellt dies eine sehr kostengünstige Lösung dar. Der Drehzahl-Sollwert wird von der Sollwertvorgabe 10 zur Verfügung gestellt. Die Drehzahlregelung erfolgt in bekannter weise mittels eines Drehzahlreglers 11 (üblicherweise ein PI-Regler), einer Strombegrenzung 12 und einem Betragsbildner 13. Die Drehzahlregelung liefert den Sollwert des Motorstroms für die der Drehzahlregelung unterlagerte Stromregelung.

Der Istwert des Motorstroms wird, wie bereits beschrieben, mittels einer Strommeßeinrichtung 4 im Gleichspannungs-Zwischenkreis 5 gemessen. Im generatorischen Betrieb arbeitet der Stromregler 14 als 2-Punkt-Stromregler. Erreicht der Motorstrom die obere Grenze des Stromregler-Hysteresebandes, werden die Leistungstransistoren der Leistungsstufe 7, die entsprechend den Signalen der Steuerlogik 15 und der Drehrichtungsumsteuerung 16 angesteuert werden, ausgeschaltet, bei Unterschreiten der unteren Grenze des Stromregler-Hysteresbandes werden sie wieder eingeschaltet.

Da der Stromregelung wegen des Betragsbildners 13 stets eine positive Ausgangsspannung zugeführt wird, wird über die Polaritätserkennung 19 der Drehrichtungsumsteuerung 16 ein Polaritätswechsel signalisiert. Die Drehrichtungsumsteuerung 16 veranlaßt dann die entsprechende Umsteuerung der Leistungstransistoren der Leistungsstufe 7 in die andere Betriebsart. Die Verknüpfung von Drehrichtungsumsteuerung 16 und Leistungsstufe 7 erfolgt über die Treiberstufe 17.

Die Steuerelektronik 18 erhält als Eingangssignale den Stromsollwert, den Stromistwert, die Information über die Solldrehrichtung und die Signale des Rotorgebers, aus denen Istdrehzahl und Istdrehrichtung ermittelt werden. In der Steuerelektronik 18 wird mittels dieser Informationen die "Aus"-zeit tₛ ermittelt.

Die berechnete Stromregler-Auszeit wird in die Register des Zeitgebers 21 eingeschrieben. Über die Steuerleitung 22 erhält der Stromregler 14 von der Steuerelektronik 18 Information über die jeweilige Betriebsart; beispielsweise liegt am Stromregler 14 im generatorischen Betrieb logisch "1" und im motorischen Betrieb logisch "0" an.

Ist die Steuerleitung 22 auf "0" gesetzt, arbeitet der Stromregler 14 praktisch hysteresefrei. Ein Signal zur Taktung nur eines der beiden Halbleiterventile des beaufschlagten Brückenzweiges gelangt zur Treiberstufe 17. Ein "Aus"-Signal des Stromreglers über die Steuerleitung 23 triggert den Zeitgeber 21. Das Triggersignal wird mit dem Ausgangssignal des Zeitgebers 21 auf das Oder-Glied 24 gegeben. Entsprechend der berechneten "Aus"-zeit tₛ wird jeweils einer der beiden Transistoren der beaufschlagten Brückenzweige bei Erreichen des Motorstrom-Sollwertes I_{Ref} ausgeschaltet.

Ist die Datenleitung 22 auf "1" gesetzt, wird die "Aus"-zeit tₛ = 0 in den Zeitgeber 21 gegeben. Der Stromregler 14 arbeitet nun als 2-Punkt-Stromregler mit Hysterese: beide Transistoren der beaufschlagten Brückenzweige werden bei Erreichen des oberen Stromgrenzwertes ausgeschaltet und bei Erreichen des unteren Stromgrenzwertes eingeschaltet.

In Fig. 6 ist das erfindungsgemäße Verfahren gemäß der Ausführungsform beschrieben, daß im generatorischen Betrieb beide Transistoren getaktet werden. Dieses Verfahren ist dann sinvoll, wenn der Motor üblicherweise im motorischen Betrieb läuft und nur beim Ausschalten kurzzeitig im generatorischen Betrieb betrieben wird. In diesem Fall tritt eine starke Geräuschentwicklung nur kurzfristig während des Bremsens auf und ist von daher wenig störend. Läuft hingegen einer der Antriebe ständig im generatorischen Betrieb, so bestimmt die Geräuschentwicklung dieses Motors die Höhe des Geräuschpegels. Hier erweist sich die Taktung nur eines Halbleiterventils im generatorischen Betrieb als äußerst vorteilhaft.

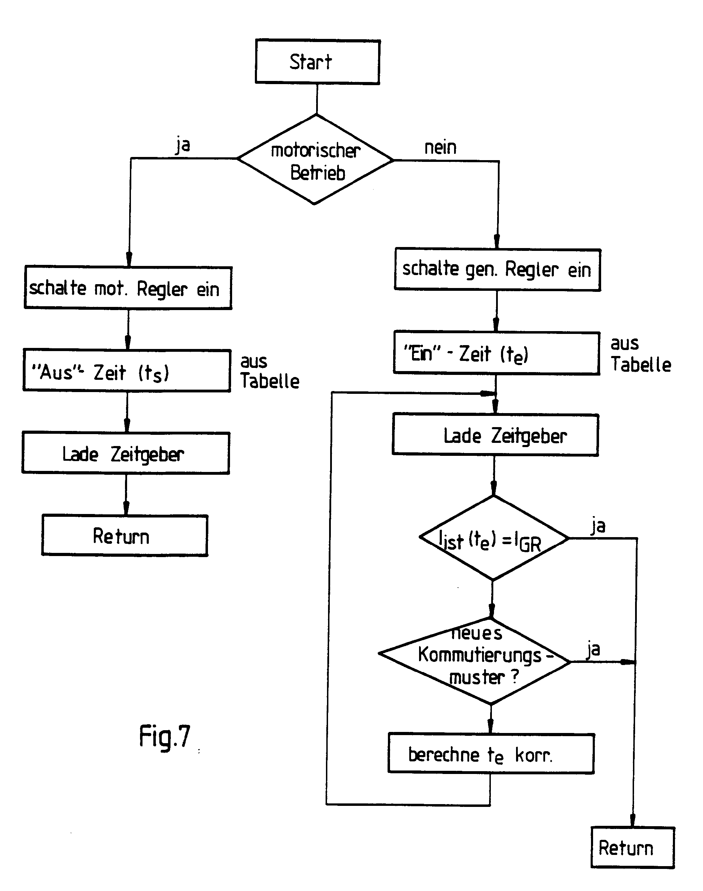

Anhand der Fig. 7 wird ein Flußdiagramm für die Ansteuerung der Sperre sowohl für den motorischen als auch für den generatorischen Betrieb beschrieben. Die Ansteuerung erfolgt über die Steuerelektronik 18 gemäß Fig. 6.

Im Programmpunkt 25 wird das Programm gestartet, sobald ein neuer Drehzahl-Istwert zur Verfügung steht. Bei 26 wird entschieden, ob motorischer oder generatorischer Betrieb vorliegt. Arbeitet der Antrieb im motorischen Betrieb, wird gemäß Programmpunkt 27 der motorische Regler eingeschaltet. Bei 29 wird die aus einer Tabelle geladene "Aus"-zeit tₛ in den Zeitgeber 21 geladen.

Arbeitet der Antrieb im generatorischen Betrieb, so wird bei 33 der generatorische Regler eingeschaltet. Anschließend wird bei 34 die "Ein"-zeit tₑ berechnet. Diese "Ein"-zeit tₑ ist ebenso wie die "Aus"-zeit tₛ im motorischen Betrieb nicht nur von der Drehzahl abhängig. So kann bei der Berechnung der "Ein"-zeit tₑ bzw. der "Aus"-zeit tₛ auch die Abhängigkeit dieser Größen von der Induktivität L des Motors, von dem Widerstandes R des Motors, von der Temperatur T des Motors oder beispielsweise auch von der Stromtoleranz I um den Stromsollwert I_{Soll} berücksichtigt werden. Bei 35 wird die "Ein"-zeit aus einer Tabelle in den Zeitgeber 21 geladen. Im Programmpunkt 36 wird geprüft, ob der Stromistwert nach Ablauf der "Ein"-zeit tₑ mit dem Grenzwert I_{Gr} des Motorstroms I_{M} übereinstimmt. Ist dies nicht der Fall, so wird bei 37 eine korrigierte "Ein"-zeit t_{e Korr} berechnet, die bei 35 wiederum in den Zeitgeber 21 geladen wird. Diese Programmpunkte laufen sukzessive so lange ab, bis der Stromistwert nach Ablauf der korrigierten Zeit t_{e Korr} mit dem Grenzwert I_{Gr} des Motorstroms I_{M} übereinstimmt. Ist diese Übereinstimmung erreicht oder steht ein neuer Drehzahl-Istwert n_{Ist} zur Verfügung, so kehrt das Programm bei 38 zum Start 25 zurück.

## Patentansprüche

1. Verfahren zur Regelung des Motorstroms in den Phasenwicklungen eines bürstenlosen Gleichstrommotors, wobei die einzelnen Phasenwicklungen über einen elektronisch steuerbaren Gleichspannungs-Zwischenkreis-Umrichter mit schaltbaren Halbleiterventilen und diesen parallel geschalteten Freilaufdioden in den einzelnen Brückenzweigen bestromt werden, und die Istwert-Erfassung des Motorstrom ausschließlich im Gleichspannungs-Zwischenkreis erfolgt,
**dadurch gekennzeichnet,**
daß bei Erreichen des Sollwertes des Motorstroms (I_{M}) im motorischen Betrieb, nur ein schaltbares Halbleiterventil (Tr1, ..., Tr4) der beaufschlagten Brückenzweige für eine von der Drehzahl abhängige Zeitdauer (tₛ) ausgeschaltet wird und der Zeitpunkt zur Wiedereinschaltung dieses Halbleiterventils (Tr1, ..., Tr4) in Abhängigkeit von der Drehzahl ermittelt wird.

2. Verfahren nach Anspruch 1,
**dadurch gekennzeichnet**,
daß im generatorischen Betrieb bei Erreichen des Sollwertes des Motorstroms (I_{M}) beide schaltbaren Halbleiterventile (Tr1, Tr4 bzw. Tr2, Tr3) in den beaufschlagten Brückenzweigen ausgeschaltet werden.

3. Verfahren nach Anspruch 1,
**dadurch gekennzeichnet**,
daß im generatorischen Betrieb nur ein schaltbares Halbleiterventil (Tr1, ..., Tr4) der beaufschlagten Brückenzweige für eine von der Drehzahl abhängige Zeitdauer (tₑ) eingeschaltet wird.

4. Verfahren nach Anspruch 1 oder 3,
**dadurch gekennzeichnet**,
daß die Zeitdauer (tₛ) bzw. die Zeitdauer (tₑ) in Abhängigkeit von weiteren Betriebszustandsgrößen des Motors festgelegt wird.

5. Verfahren nach Anspruch 3 oder 4,
**dadurch gekennzeichnet**,
daß die Zeitdauer (tₑ) nach dem Einschalten des Motors oder nach der Kommutierung so bemessen ist, daß der erste meßbare Motorstrom-Istwert (I_{Ist}) möglichst nahe am Motorstrom-Sollwert (I_{Soll}) liegt.

6. Verfahren nach Anspruch 5,
**dadurch gekennzeichnet**,
daß das schaltbare Halbleiterventil (Tr1, ..., Tr4) der beaufschlagten Brückenzweige für eine Mindest-Auszeit (t_{aus min}) ausgeschaltet wird.

7. Verfahren nach Anspruch 3,
**dadurch gekennzeichnet**,
daß bei Ablauf der Zeitdauer (tₑ) das schaltbare Halbleiterventil (Tr1, ..., Tr4) der beaufschlagten Brückenzweige ausgeschaltet wird,
daß der im Zwischenkreis gemessene Motorstrom-Istwert (I_{Ist}) abgespeichert wird,
daß dieser Motorstrom-Istwert (I_{Ist}) mit einem Motorstrom-Sollwert (I_{Soll}) verglichen wird, und daß bei einer Abweichung des Motorstrom-Istwertes (I_{Ist}) vom Motorstrom-Sollwert (I_{Soll}) ein Korrekturwert (K) ermittelt wird, der in die Bemessung der folgenden Einschaltzeitdauer (t_{eKorr}) des schaltbaren Halbleiterventils (Tr1, ..., Tr4) der beaufschlagten Brückenzweige einfließt.

8. Verfahren nach Anspruch 7,
**dadurch gekennzeichnet**,
daß bei Erreichen eines zuvor festgelegten unteren Grenzwertes (I_{Gr}) das schaltbare Halbleiterventil (Tr1, ..., Tr4) der beaufschlagten Brückenzweige für die korrigierte Zeitdauer (t_{eKorr}) eingeschaltet wird.

9. Verfahren nach einem oder mehreren der vorhergehenden Ansprüche,
**dadurch gekennzeichnet**,
daß der Umschaltpunkt zwischen generatorischem und motorischem Betrieb nicht bei n = 0 min⁻¹ liegt, sondern bei einer niedrigen Drehzahl im generatorischen Bereich.

10. Verfahren nach Anspruch 1 oder 3,
**dadurch gekennzeichnet**,
daß die schaltbaren Halbleiterventile (Tr1, Tr4 bzw. Tr2, Tr3) der beaufschlagten Brückenzweige bei jeder Kommutierung abwechselnd ausgeschaltet (motorischer Betrieb) bzw. eingeschaltet werden (generatorischer Betrieb).

11. Verfahren nach Anspruch 3,
**dadurch gekennzeichnet**,
daß der Stromaufbau abwechselnd über den oberen (V3, Tr1 bzw. V1, Tr3) oder über den unteren Kreis (Tr4, V2 bzw. Tr2, V4) erfolgt.

## Claims

1. Method for controlling the motor current in the phase windings of a brushless direct-current motor, the individual phase windings being supplied with current via an electronically controllable direct-voltage link converter with switchable semiconductor valves and freewheeling diodes, connected in parallel with the semiconductor valves, in the individual bridge branches and the actual value of the motor current being sensed exclusively in the direct-voltage link circuit, characterised in that, when the setpoint of the motor current (I_{M}) is reached in motor operation, only one switchable semiconductor valve (Tr1, ..., Tr4) of the loaded bridge branches is switched off for a period (tₛ) dependent on the speed of rotation, and the time for switching this semiconductor valve (Tr1, ..., Tr4) back on again is determined as a function of the speed of rotation.

2. Method according to Claim 1, characterised in that, when the setpoint of the motor current (I_{M}) is reached in generator operation, both switchable semiconductor valves (Tr1, Tr4 or, respectively, Tr2, Tr3) are switched off in the loaded bridge branches.

3. Method according to Claim 1, characterised in that, in generator operation, only one switchable semiconductor valve (Tr1, ..., Tr4) of the loaded bridge branches is switched on for a period (tₑ) dependent on the speed of rotation.

4. Method according to Claim 1 or 3, characterised in that the period (tₛ) or the period (tₑ) is established as a function of other operating state variables of the motor.

5. Method according to Claim 3 or 4, characterised in that the period (tₑ) after the switching-on of the motor or after commutation is dimensioned in such a manner that the first measurable actual motor current value (Iᵢₛₜ) is as close as possible to the motor current setpoint (Iₛₒₗₗ).

6. Method according to Claim 5, characterised in that the switchable semiconductor valve (Tr1, ..., Tr4) of the loaded bridge branches is switched off for a minimum off time (t_{aus min}).

7. Method according to Claim 3, characterised in that, when the period (tₑ) has elapsed, the switchable semiconductor valve (Tr1, ..., Tr4) of the loaded bridge branches is switched off, in that the actual motor current value (Iᵢₛₜ) measured in the link circuit is stored, in that this actual motor current value (Iᵢₛₜ) is compared with a motor current setpoint (Iₛₒₗₗ), and in that, when the actual motor current value (Iᵢₛₜ) deviates from the motor current setpoint (Iₛₒₗₗ), a correction value (K) is determined which is included in the dimensioning of the following switch-on period (t_{eKorr}) of the switchable semiconductor valve (Tr1, ..., Tr4) of the loaded bridge branches.

8. Method according to Claim 7, characterised in that, when a previously established lower limit value (I_{Gr}) is reached, the switchable semiconductor valve (Tr1, ..., Tr4) of the loaded bridge branches is switched on for the corrected period (t_{eKorr}).

9. Method according to one or more of the preceding claims, characterised in that the switch-over point between generator and motor operation is not at n = 0 min⁻¹ but at a lower speed of rotation in the generator domain.

10. Method according to Claim 1 or 3, characterised in that the switchable semiconductor valves (Trl, Tr4 or, respectively, Tr2, Tr3) of the loaded bridge branches are alternately switched off (motor operation) or switched on (generator operation) during each commutation.

11. Method according to Claim 3, characterised in that the current is built up alternately via the upper circuit (V3, Tr1 and, respectively, V1, Tr3) or via the lower circuit (Tr4, V2 and, respectively, Tr2, V4).

## Revendications

1. Procédé de régulation du courant du moteur dans les enroulements de phase d'un moteur à courant continu sans balais, dans lequel les différents enroulements de phase sont alimentés en courant par l'intermédiaire d'un convertisseur à circuit intermédiaire à tension continue, à commande électronique, avec des valves à semi-conducteurs commutables et des diodes de roue libre montées en parallèle à celles-ci dans les différentes branches de pont, et la détection de la valeur réelle du courant du moteur s'effectue exclusivement dans le circuit intermédiaire à tension continue, caractérisé en ce que lorsqu'est atteinte la valeur de consigne du courant du moteur (I_{M}) en fonctionnement en moteur, seule est mise hors circuit une valve à semi-conducteurs commutable (Tr1, ..., Tr4) de la branche de pont alimentée, pendant une durée (tₛ) dépendant de la vitesse de rotation et l'instant de remise sous tension de cette valve à semi-conducteurs (Tr1, ..., Tr4) est déterminé en fonction de la vitesse de rotation.

2. Procédé selon la revendication 1, caractérisé en ce qu'en fonctionnement en générateur, lorsque la valeur de consigne du courant du moteur (I_{M}) est atteinte, les deux valves à semi-conducteurs (Tr1, Tr4 ou Tr2, Tr3) commutables sont mises hors tension dans les branches de pont alimentées.

3. Procédé selon la revendication 1, caractérisé en ce qu'en fonctionnement en générateur seule une valve à semiconducteurs (Tr1, ..., Tr4) commutable de la branche de pont alimentée est mise sous tension pendant une durée (tₑ) dépendant de la vitesse de rotation.

4. Procédé selon les revendications 1 ou 3, caractérisé en ce que la durée (tₛ) ou la durée (tₑ) est définie en fonction d'autres grandeurs d'état de fonctionnement du moteur.

5. Procédé selon les revendications 3 ou 4, caractérisé en ce que la durée (tₑ) est mesurée, après mise en marche du moteur ou après la commutation, de manière que la première valeur réelle du courant du moteur (I_{Ist}) mesurable soit aussi proche que possible de la valeur de consigne du courant du moteur (I_{Soll}).

6. Procédé selon la revendication 5, caractérisé en ce que la valve à semi-conducteurs (Tr1, ..., Tr4) commutable de la branche de pont alimentée est mise hors tension pendant un temps d'arrêt minimal (t_{aus min}).

7. Procédé selon la revendication 3, caractérisé en ce que pendant le déroulement de la durée (tₑ), la valve à semiconducteurs (Tr1, ..., Tr4) commutable de la branche de pont alimentée est mise hors tension, en ce que la valeur réelle du courant du moteur (I_{Ist}) mesurée dans le circuit intermédiaire est mémorisée, en ce que cette valeur réelle du courant du moteur (I_{Ist}) est comparée à une valeur de consigne du courant du moteur (I_{Soll}), et en ce qu'en cas d'écart entre la valeur réelle du courant du moteur (I_{Ist}) et la valeur de consigne du courant du moteur (I_{Soll}), il est déterminé une valeur de correction (K), qui est intégrée de la durée de mise sous tension (tekorr) suivante de la valve à semi-conducteurs (Tr1, ..., Tr4) commutable de la branche de pont alimentée.

8. Procédé selon la revendication 7, caractérisé en ce que dans le cas où est atteinte une valeur limite inférieure (I_{Gr}) préalablement définie, la valve à semi-conducteurs (Tr1, ..., Tr4) commutable de la branche de pont alimentée est mise sous tension pendant la durée corrigée (tₑₖₒᵣᵣ).

9. Procédé selon une ou plusieurs des revendications précédentes, caractérisé en ce que le point de commutation entre le fonctionnement en générateur et le fonctionnement en moteur ne se situe pas pour n = 0 min⁻¹, mais pour une vitesse de rotation basse en fonctionnement en générateur.

10. Procédé selon les revendications 1 ou 3, caractérisé en ce que les valves à semi-conducteurs (Tr1, Tr4 ou Tr2, Tr3) commutables de la branche de pont alimentée sont alternativement mises hors tension (fonctionnement en moteur) et mises sous tension (fonctionnement en générateur) à chaque commutation.

11. Procédé selon la revendication 3, caractérisé en ce que la constitution du courant s'effectue alternativement par le circuit supérieur V3, Tr1 ou V1, Tr3) ou par le circuit inférieur (Tr4, V2 ou Tr2, V4).
